# EUROPEAN PATENT APPLICATION

(11) **EP 4 827 072 A1**
(43) Date of publication of application: **21.10.2026**
(21) Application number: 24911204.6
(22) Date of filing: 25.12.2024
(51) Int. Cl.: H04M 1/72469, G06F 3/0487

(54) **INTERACTION METHOD AND APPARATUS FOR CLOUD MOBILE PHONE**

(30) Priority: 26.12.2023 CN 202311813704; 29.04.2024 CN 202410547322
(71) Applicant: Huawei Cloud Computing Technologies Co., Ltd., Gui'an New District, Guizhou 550025 (CN)
(72) Inventor: LEI, Gang, Guiyang, Guizhou 550025 (CN); LIU, Qiangqiang, Guiyang, Guizhou 550025 (CN); WANG, Shuo, Guiyang, Guizhou 550025 (CN); LV, Zhiwei, Guiyang, Guizhou 550025 (CN); CHEN, Lixin, Guiyang, Guizhou 550025 (CN)
(74) Representative: Huawei European IPR
(86) International application number: PCT/CN2024/142211
(87) International publication number: WO 2025/140280

(57) **Abstract**

Embodiments of this application disclose an interaction method and apparatus for a cloud mobile phone, to increase a proportion of a visible region of a user interface of the cloud mobile phone. The method in embodiments of this application includes: A terminal device sends a first event instruction to a cloud server in response to a first input event of a user, where the first event instruction is used to request the cloud server to generate updated content of a cloud mobile phone service. The terminal device receives an event response message sent by the cloud server, where the event response message includes the updated content generated by the cloud server based on the event instruction. The terminal device displays the updated content on the terminal device based on the event response message, where the updated content includes one or more of the following: a navigation bar, a previous interface, and a next interface.

## Description

This application claims priorities to Chinese Patent Application No. 202311813704.6, filed with the China National Intellectual Property Administration on December 26, 2023 and entitled "INTERFACE NAVIGATION METHOD AND APPARATUS", and to Chinese Patent Application No. 202410547322.1, filed with the China National Intellectual Property Administration on April 29, 2024 and entitled "INTERACTION METHOD AND APPARATUS FOR CLOUD MOBILE PHONE", both of which are incorporated herein by reference in their entireties.

### TECHNICAL FIELD

Embodiments of this application relate to the field of cloud computing, and in particular, to an interaction method and apparatus for a cloud mobile phone.

### BACKGROUND

With the development of cloud computing technologies, as a virtual mobile phone service provided based on the cloud computing technology, cloud mobile phones have also been increasingly widely used. In an application scenario of the cloud mobile phone, the cloud mobile phone does not need an actual hardware device to complete communication and computing. Instead, an operating system and an application of the mobile phone are run on a remote cloud server, so that a user can access the cloud mobile phone via various terminal devices, without being limited to a specific hardware device.

Currently, in a process in which the user interacts with the cloud mobile phone via the terminal device, the user usually controls a display interface of the cloud mobile phone by using a navigation bar on a cloud mobile phone interface or a floating ball on a cloud mobile phone interface, to ensure that the user can perform interface switching and interface navigation during use of the cloud mobile phone. However, a manner in which the navigation bar resides in the display interface of the cloud mobile phone or the system navigation bar is displayed by using the floating ball during use occupies a visible and operable region of the cloud mobile phone on the terminal device for the user. This reduces an effective display area ratio of the visible and operable region when the user uses the cloud mobile phone, and results in poor interaction experience between the user and the cloud mobile phone.

### SUMMARY

Embodiments of this application provide an interaction method for a cloud mobile phone. In embodiments of this application, in a process in which a user uses the cloud mobile phone, a cloud server can update display content of a user interface of the cloud mobile phone based on an input event of the user, so that a navigation bar is displayed when the user performs a specified operation, to improve an effective display area ratio of a visible region when the user uses the cloud mobile phone. Embodiments of this application further provide an interaction apparatus for a cloud mobile phone, a compute device, a compute device cluster, a computer-readable storage medium, and a computer program product that correspond to the interaction method for a cloud mobile phone.

According to a first aspect, an embodiment of this application provides an interaction method for a cloud mobile phone. The method may be performed by a terminal device or a cloud server, or may be performed by a component of a terminal device or a cloud server, for example, a processor, a chip, a chip system, or the like of the terminal device or the cloud server, or may be implemented by a logical module or software that can implement all or some functions of a terminal device or a cloud server. The method provided in the first aspect includes: The terminal device sends a first event instruction to the cloud server in response to a first input event of a user, where the first event instruction is used to request the cloud server to generate updated content of a cloud mobile phone service. The terminal device receives an event response message sent by the cloud server, where the event response message includes the updated content generated by the cloud server based on the event instruction. The terminal device displays the updated content on the terminal device based on the event response message, where the updated content includes one or more of the following: a navigation bar, a previous interface, and a next interface.

In this embodiment of this application, the terminal device of a cloud mobile phone system can send an event instruction to the cloud server based on an input event of the user, so that the cloud server updates content of a user interface of the cloud mobile phone based on the event instruction. Therefore, in this embodiment of this application, the user can control, based on a specified action event, the cloud mobile phone to display content that the user expects to obtain. Compared with a current solution in which content such as the navigation bar on a cloud mobile phone interface fixedly occupies the user interface of the cloud mobile phone, the cloud mobile phone interaction solution in this embodiment of this application improves an effective display area ratio of a visible region and display flexibility of the user interface of the cloud mobile phone.

In a possible implementation, the first input event includes one or more of the following: a screen tap or swipe, a device shake, a custom gesture, and a voice command. For example, the user causes, by tapping the screen, the user interface of the cloud mobile phone to display the navigation bar; the user causes, by swiping rightward on the screen, the user interface of the cloud mobile phone to return to the previous interface; the user causes, by swiping leftward on the screen, the user interface of the cloud mobile phone to go to the next interface; the user causes, by shaking the terminal device, the user interface of the cloud mobile phone to go to a home screen; and the user triggers, by using a custom gesture, a screenshot of a current user interface of the cloud mobile phone.

In this embodiment of this application, the user can control display content of the user interface of the cloud mobile phone based on a plurality of input events, to improve flexibility of controlling the user interface of the cloud mobile phone.

In a possible implementation, the updated content is the navigation bar. The navigation bar includes one or more of the following virtual buttons: a back button, a home button, and a menu button. The navigation bar is displayed at a bottom of a cloud mobile phone interface, or the navigation bar is displayed in a partial region of a cloud mobile phone interface. When the navigation bar is displayed in the partial region of the cloud mobile phone interface, the navigation bar may be a virtual navigation button.

In this embodiment of this application, the user can control, based on a specified input event, the cloud mobile phone to display the navigation bar at the bottom or in the partial region of the user interface, so that the cloud mobile phone displays the navigation bar only when the user needs to perform an operation in the navigation bar, to improve the effective display area ratio of the visible region and display flexibility of the navigation bar on the user interface of the cloud mobile phone.

In a possible implementation, in a process in which the terminal device sends the first event instruction to the cloud server in response to the first input event of the user, the terminal device sends a rightward-swipe event instruction to the cloud server in response to a rightward-swipe action of the user, where the rightward-swipe event instruction is used to request the cloud server to return to the previous user interface.

In this embodiment of this application, the user can cause, by swiping rightward on the screen, the user interface of the cloud mobile phone to return to the previous interface, to improve flexibility and operation efficiency of controlling the user interface of the cloud mobile phone for the user.

In a possible implementation, in a process in which the terminal device sends the first event instruction to the cloud server in response to the first input event of the user, the terminal device sends a leftward-swipe event instruction to the cloud server in response to a leftward-swipe action of the user, where the leftward-swipe event instruction is used to request the cloud server to go to a next user interface of the current user interface.

In this embodiment of this application, the user can control, by swiping leftward on the screen, the user interface of the cloud mobile phone to go to the next interface, to improve flexibility and operation efficiency of controlling the user interface of the cloud mobile phone for the user.

In a possible implementation, in a process in which the terminal device sends the first event instruction to the cloud server in response to the first input event of the user, the terminal device sends a tap event instruction to the cloud server in response to a screen tap action of the user, where the tap event instruction is used to request the cloud server to display the navigation bar on the current user interface.

In this embodiment of this application, the user may control, by tapping the screen, the user interface of the cloud mobile phone to display the navigation bar, to improve flexibility and operation efficiency of controlling the user interface of the cloud mobile phone for the user.

In a possible implementation, the terminal device sends a second event instruction to the cloud server in response to a second input event of the user for the virtual button in the navigation bar, where the second event instruction is used to request the cloud server to generate a cloud mobile phone interface corresponding to the virtual button, and the second input event includes one or more of the following: tapping the screen, a custom gesture, and voice control. For example, when the user wants to return to a previous interface of the current user interface of the cloud mobile phone, the user taps a back button in the navigation bar, and the terminal device sends a back button tap event instruction to the cloud server, where the back button tap event instruction is used to request the cloud server to generate the previous interface of the current user interface of the cloud mobile phone. For another example, when the user wants to return to the home screen of the user interface of the cloud mobile phone, the user taps the home button in the navigation bar, and the terminal device sends a home button tap event instruction to the cloud server, where the home button tap event instruction is used to request the cloud server to generate the home screen of the user interface of the cloud mobile phone.

In this embodiment of this application, the user can further perform an operation on the virtual button in the navigation bar on the user interface of the cloud mobile phone, so that the cloud mobile phone interface corresponding to the virtual button is displayed on the user interface of the cloud mobile phone, to improve display flexibility of the user interface of the cloud mobile phone.

In a possible implementation, after the terminal device displays the updated content on the terminal device based on the event response message, when the terminal device does not receive an input event of the user within a preset duration, the terminal device receives an event message sent by the cloud server, where the event message indicates the terminal device to hide the navigation bar on the cloud mobile phone interface.

In this embodiment of this application, when the user does not perform an operation on the virtual button in the navigation bar on the user interface of the cloud mobile phone within the preset duration, the cloud server hides the navigation bar, to improve the effective display area ratio of the visible region of the user interface of the cloud mobile phone.

In a possible implementation, when the navigation bar is displayed in the partial region of the cloud mobile phone interface, the navigation bar appears as a virtual navigation button, and the terminal device sends a short press event instruction to the cloud server in response to a short press action of the user on the virtual navigation button, where the short press event instruction is used to request the cloud server to generate the home screen of the cloud mobile phone, and a duration of the short press action is less than a first threshold. The first threshold is, for example, 200 milliseconds.

In this embodiment of this application, when the navigation bar appears as a virtual navigation button, and the user expects the user interface of the cloud mobile phone to display the home screen, the user may control, by short-pressing the virtual navigation button on the user interface of the cloud mobile phone, the cloud server to generate the home screen of the cloud mobile phone. That is, the user can perform operations on the virtual navigation button on the user interface of the cloud mobile phone based on different button duration, to implement different operation intentions, and improve flexibility of controlling the user interface of the cloud mobile phone by the user.

In a possible implementation, when the navigation bar is displayed in the partial region of the cloud mobile phone interface, the navigation bar appears as a virtual navigation button, and the terminal device sends a press-and-hold event instruction to the cloud server in response to a press-and-hold action of the user on the virtual navigation button, where the press-and-hold event instruction is used to request the cloud server to generate a menu interface of the cloud mobile phone, and a duration of the press-and-hold action is greater than or equal to a first threshold.

In this embodiment of this application, when the navigation bar appears as a virtual navigation button, and the user expects the user interface of the cloud mobile phone to display the menu interface, the user may control, by pressing and holding the virtual navigation button on the user interface of the cloud mobile phone, the cloud server to generate the menu interface of the cloud mobile phone. In this embodiment of this application, the user can perform operations on the virtual navigation button on the user interface of the cloud mobile phone based on different button duration, to implement different operation intentions of the user, and improve flexibility of controlling the user interface of the cloud mobile phone by the user.

According to a second aspect, an embodiment of this application provides an interaction apparatus for a cloud mobile phone. The apparatus includes a transceiver unit and a processing unit. The transceiver unit is configured to send a first event instruction to a cloud server in response to a first input event of a user, where the first event instruction is used to request the cloud server to generate updated content of a cloud mobile phone service. The transceiver unit is further configured to receive an event response message sent by the cloud server, where the event response message includes the updated content generated by the cloud server based on the event instruction. The processing unit is configured to display the updated content on a terminal device based on the event response message, where the updated content includes one or more of the following: a navigation bar, a previous interface, and a next interface.

In a possible implementation, the first input event includes one or more of the following: a screen tap or swipe, a device shake, a custom gesture, and a voice command.

In a possible implementation, the updated content is the navigation bar. The navigation bar includes one or more of the following virtual buttons: a back button, a home button, and a menu button. The navigation bar is displayed at a bottom of a cloud mobile phone interface, or the navigation bar is displayed in a partial region of a cloud mobile phone interface.

In a possible implementation, the transceiver unit is further configured to send a second event instruction to the cloud server in response to a second input event of the user for the virtual button in the navigation bar, where the second event instruction is used to request the cloud server to generate a cloud mobile phone interface corresponding to the virtual button, and the second input event includes one or more of the following: tapping the screen, a custom gesture, and voice control.

In a possible implementation, the transceiver unit is further configured to: when the terminal device does not receive an input event of the user within a preset duration, receive an event message sent by the cloud server, where the event message indicates the terminal device to hide the navigation bar on the cloud mobile phone interface.

In a possible implementation, when the navigation bar is displayed in the partial region of the cloud mobile phone interface, the navigation bar appears as a virtual navigation button, and the transceiver unit is further configured to send a short press event instruction to the cloud server in response to a short press action of the user on the virtual navigation button, where the short press event instruction is used to request the cloud server to generate a home screen of the cloud mobile phone, and a duration of the short press action is less than a first threshold.

In a possible implementation, when the navigation bar is displayed in the partial region of the cloud mobile phone interface, the navigation bar appears as a virtual navigation button, and the transceiver unit is further configured to send a press-and-hold event instruction to the cloud server in response to a press-and-hold action of the user on the virtual navigation button, where the press-and-hold event instruction is used to request the cloud server to generate a menu interface of the cloud mobile phone, and a duration of the press-and-hold action is greater than or equal to the first threshold.

According to a third aspect, an embodiment of this application provides a compute device. The compute device includes a processor, the processor is coupled to a memory, and the processor is configured to store instructions. When the instructions are executed by the processor, the compute device is enabled to perform the method according to the first aspect or any one of the possible implementations of the first aspect.

According to a fourth aspect, an embodiment of this application provides a compute device cluster. The compute device cluster includes one or more compute devices, the compute device includes a processor, the processor is coupled to a memory, and the processor is configured to store instructions. When the instructions are executed by the processor, the compute device cluster is enabled to perform the method according to the first aspect or any one of the possible implementations of the first aspect.

According to a fifth aspect, an embodiment of this application provides a computer-readable storage medium. The computer-readable storage medium stores instructions. When the instructions are executed, a computer is enabled to perform the method according to the first aspect or any one of the possible implementations of the first aspect.

According to a sixth aspect, an embodiment of this application provides a computer program product. The computer program product includes instructions. When the instructions are executed, a computer is enabled to implement the method according to the first aspect or any one of the possible implementations of the first aspect.

It may be understood that, for beneficial effects that can be achieved by any one of the interaction apparatus for a cloud mobile phone, the compute device, the compute device cluster, the computer-readable medium, the computer program product, or the like provided above, refer to beneficial effects in a corresponding method. Details are not described herein again.

### BRIEF DESCRIPTION OF DRAWINGS

FIG. 1 is a diagram of a system architecture of a cloud mobile phone system according to an embodiment of this application;
FIG. 2 is a schematic flowchart of an interaction method for a cloud mobile phone according to an embodiment of this application;
FIG. 3A and FIG. 3B is a diagram of a user interface of a cloud mobile phone according to an embodiment of this application;
FIG. 4 is a diagram of another user interface of a cloud mobile phone according to an embodiment of this application;
FIG. 5A and FIG. 5B is a diagram of another user interface of a cloud mobile phone according to an embodiment of this application;
FIG. 6 is a diagram of another user interface of a cloud mobile phone according to an embodiment of this application;
FIG. 7 is a diagram of another user interface of a cloud mobile phone according to an embodiment of this application;
FIG. 8 is a diagram of an interaction apparatus for a cloud mobile phone according to an embodiment of this application;
FIG. 9 is a diagram of a structure of a compute device according to an embodiment of this application;
FIG. 10 is a diagram of a structure of a compute device cluster according to an embodiment of this application; and
FIG. 11 is a diagram of a structure of another compute device cluster according to an embodiment of this application.

### DESCRIPTION OF EMBODIMENTS

Embodiments of this application provide an interaction method and apparatus for a cloud mobile phone, to improve an effective display area ratio of a visible region and interaction flexibility in an interaction process of the cloud mobile phone.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the terms such as "example" or "for example" is intended to present a related concept in a specific manner.

First, some terms in embodiments of this application are described, to help a person skilled in the art understand the technical solutions.

A navigation bar is a button display window used for interface interaction and switching in a terminal display device, for example, a view window that carries return, a home screen, and a multitask interface at a bottom of an Android (Android) mobile phone.

Interface navigation is an interaction and switching operation on an interface of a terminal device, for example, returning to a previous interface, returning to a home screen, or displaying a multitask interface.

A floating ball is a small interactive view that carries extended functions on a user interface. Usually, the floating ball is a small round ball button icon that can be moved and tapped. The floating ball floats at the top of the view. When the floating ball is tapped, an interface view that carries the functions is displayed, and the interface view may be moved on the interface.

An effective display area ratio means a proportion of a visible and operable region of a screen in an area of a front face of an entire device. A larger screen-to-body ratio indicates a larger visible and operable area, and a smaller effective display area ratio indicates a smaller visible and operable area.

To make the technical solutions of this application clearer and easier to understand, the following describes a system architecture of this application with reference to the accompanying drawings.

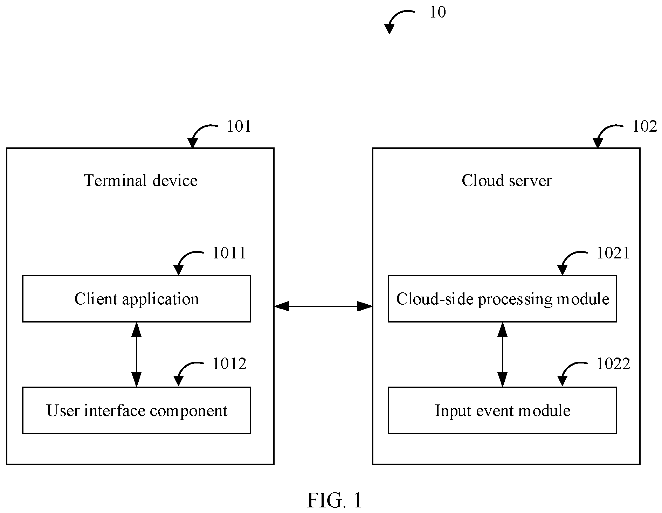

FIG. 1 is a diagram of a system architecture of an interaction system of a cloud mobile phone according to an example of this application. In the example shown in FIG. 1, a cloud mobile phone system 10 includes a terminal device 101 and a cloud server 102. The terminal device 101 includes a client application 1011 and a user interface component 1012. The cloud server 102 includes a cloud-side processing module 1021 and an input event module 1022. The following describes specific functions of each part of the cloud mobile phone system 10.

The terminal device 101 is a device for interaction between a user and the cloud server 102 of the cloud mobile phone, and the cloud mobile phone supports a plurality of types of terminal devices. For example, the terminal device 101 includes but is not limited to a mobile phone, a tablet computer, a notebook computer, or the like. The terminal device 101 may be connected to the cloud server 102 of the cloud mobile phone through a network, and the user may remotely access and control an application and a function on the cloud mobile phone via the terminal device 101.

The terminal device 101 includes the client application 1011 and the user interface component 1012. The client application 1011 includes one or more applications installed on the terminal device 101. The client application 1011 is configured to: establish a connection with the cloud server 102, and provide a user interface of the cloud mobile phone. The user may access, via the client application 1011, the cloud mobile phone system provided by the cloud server 102.

The user interface component 1012 is configured to display the user interface of the cloud mobile phone. The user interface component 1012 is further configured to: obtain an input event of the user, and transmit the input event of the user to the cloud server 102. The input event of the user includes a plurality of types of device input events. The plurality of types of device input events include, for example, operations such as tapping and swiping on a screen by the user, an input operation performed by the user on a keyboard, a voice control operation performed by the user on a microphone.

The cloud server 102 is a server that provides the cloud mobile phone. The cloud server 102 may create a plurality of cloud mobile phone instances on the server by using a virtualization technology, and each cloud mobile phone instance has an independent operating system and an independent application environment. The cloud server 102 is further configured to: receive an operation instruction of the user of the terminal device 101 on the cloud mobile phone, provide a compute resource and a storage resource of the cloud mobile phone based on the operation instruction of the user, and manage the application and data on the cloud mobile phone based on the operation instruction.

The cloud server 102 includes the cloud-side processing module 1021 and the input event module 1022. The cloud-side processing module 1021 is configured to implement a core function of a mobile phone system, including managing a login session of the user, performing user identity verification, allocating and managing the cloud mobile phone instance, and the like. The cloud-side processing module 1021 is further configured to: generate a response message of the operation instruction in response to the operation instruction sent by the terminal device 101, and send the response message corresponding to the operation instruction to the terminal device 101. The response message of the operation instruction includes the user interface of the cloud mobile phone generated by the cloud server 102, and the like.

The input event module 1022 is configured to record the input event of the user of the terminal device 101. The cloud-side processing module 1021 may obtain the input event of the user for the cloud mobile phone from the input event module 1022, and make a corresponding response based on the input event of the user. The input event recorded by the input event module 1022 includes input events made by the user based on different hardware of the terminal device 101, where different hardware is, for example, the keyboard, a mouse, the microphone, and a touchscreen.

Based on the cloud mobile phone system 10 shown in FIG. 1, this application further provides an interaction method for a cloud mobile phone. The following describes, with reference to embodiments, the interaction method for a cloud mobile phone provided in embodiments of this application.

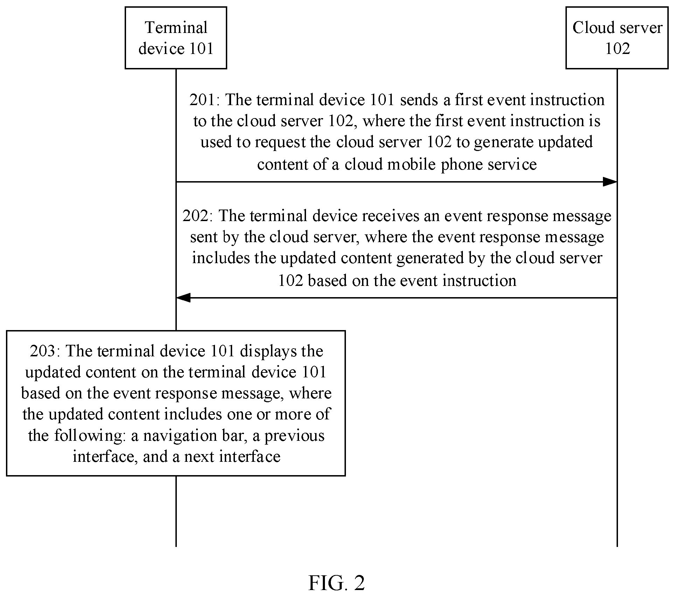

FIG. 2 is a schematic flowchart of an interaction method a cloud mobile phone according to an embodiment of this application. In an example shown in FIG. 2, the method includes the following steps.

201: A terminal device 101 sends a first event instruction to a cloud server 102, where the first event instruction is used to request the cloud server to generate updated content of a cloud mobile phone service.

The terminal device 101 sends the first event instruction to the cloud server 102 in response to a first input event of a user, where the first event instruction is used to request the cloud server 102 to generate the updated content of the cloud mobile phone service, and the updated content of the cloud mobile phone service is a cloud mobile phone interface generated by the cloud server 102 based on the first event instruction.

In this embodiment of this application, the first input event of the user includes one or more of the following: a screen tap or swipe, a device shake, a custom gesture, and a voice command. The updated content of the cloud mobile phone service includes one or more of the following: displaying a navigation bar on a user interface of the cloud mobile phone, displaying a previous interface of the user interface of the cloud mobile phone, and displaying a next interface of the user interface of the cloud mobile phone.

For example, in an example of step 201, in a process in which the user uses the cloud mobile phone via the terminal device 101, when the user wants the navigation bar to be displayed on the user interface of the cloud mobile phone, the user performs a tap operation on the user interface of the cloud mobile phone displayed on the screen of the terminal device 101. The terminal device 101 sends a screen tap event instruction to the cloud server 102 in response to a screen tap action of the user, where the screen tap event instruction is used to request the cloud server 102 to generate a user interface of the cloud mobile phone including the navigation bar.

In a possible implementation, the terminal device 101 sends a rightward-swipe event instruction to the cloud server 102 in response to a rightward-swipe action of the user, where the rightward-swipe event instruction is used to request the cloud server 102 to return to the previous user interface.

Specifically, when the user wants the user interface of the cloud mobile phone to return to the previous interface, after the user swipes rightward on the screen, a user interface component 1012 of the terminal device 101 obtains a rightward-swipe input event, and sends key code (key code) corresponding to the rightward-swipe input event to the cloud server 102. The cloud server 102 records the rightward-swipe input event corresponding to the key code to the input event module 1022, and requests a cloud-side processing module 1021 to generate the previous interface of the current user interface.

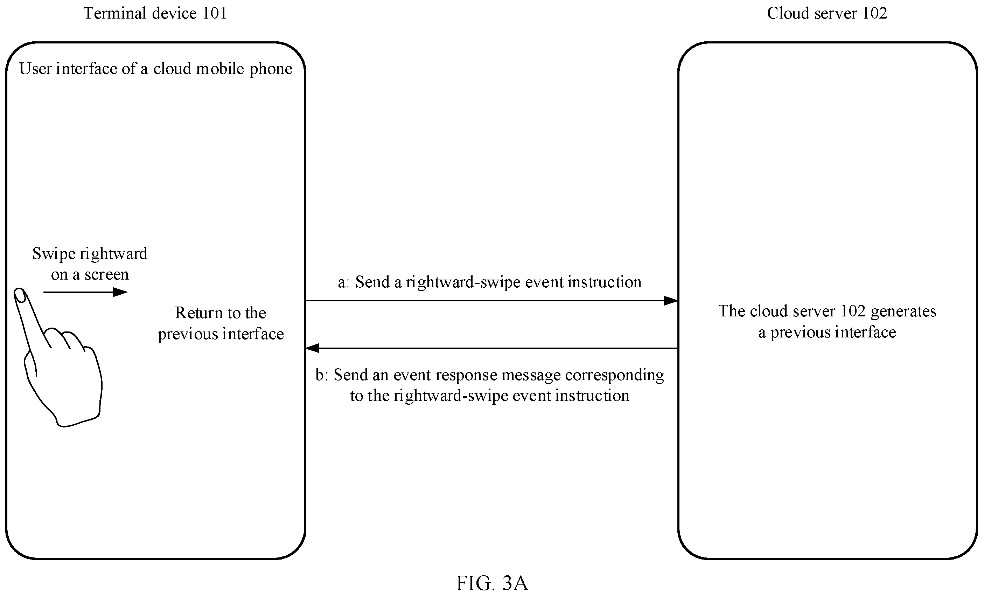

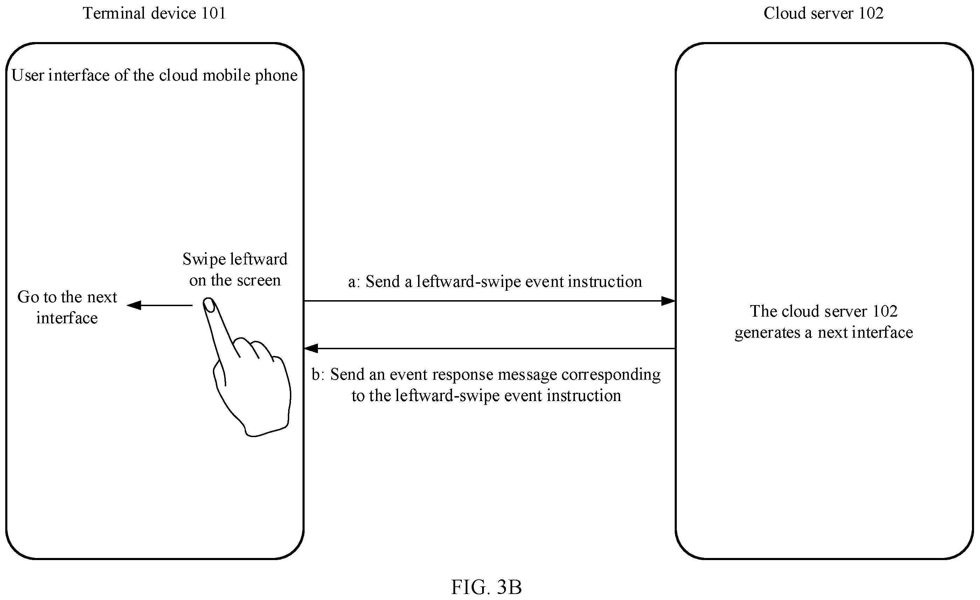

FIG. 3A and FIG. 3B is a diagram of interaction of a cloud mobile phone according to an embodiment of this application. In an example shown in FIG. 3A and FIG. 3B, when the user uses the cloud mobile phone service on the terminal device 101, the terminal device 101 first establishes a network connection between the terminal device 101 and the cloud server 102 based on a client application 1011 corresponding to the cloud mobile phone, and then the terminal device 101 receives a user interface sent by the cloud server 102, and displays, based on the user interface component 1012, the user interface of the cloud mobile phone sent by the cloud server 102.

In FIG. 3A of the example shown in FIG. 3A and FIG. 3B, in a process in which the user uses the cloud mobile phone service based on the terminal device 101, when the user wants to return to the previous user interface from the current user interface of the cloud mobile phone, the user may swipe rightward on the screen of the terminal device 101, the terminal device 101 responds to the rightward-swipe action of the user, and the terminal device 101 sends the rightward-swipe event instruction to the cloud server 102.

In a possible implementation, the terminal device 101 sends a leftward-swipe event instruction to the cloud server 102 in response to a leftward-swipe action of the user, where the leftward-swipe event instruction is used to request the cloud server 102 to go to a next user interface of the current user interface.

Specifically, when the user wants to go to the next interface of the user interface of the cloud mobile phone, after the user swipes leftward on the screen, the user interface component 1012 of the terminal device 101 obtains a leftward-swipe input event, and sends key code corresponding to the leftward-swipe input event to the cloud server 102. The cloud server 102 records the leftward-swipe input event corresponding to the key code to the input event module 1022, and requests the cloud-side processing module 1021 to generate the next interface of the current user interface.

Still refer to FIG. 3A and FIG. 3B. In FIG. 3B of the example shown in FIG. 3A and FIG. 3B, in the process in which the user uses the cloud mobile phone service based on the terminal device 101, when the user wants to go to the next user interface from the current user interface of the cloud mobile phone, the user may swipe on the screen of the terminal device 101 leftward, the terminal device 101 responds to the leftward-swipe action of the user, and the terminal device 101 sends the leftward-swipe event instruction to the cloud server 102.

In a possible implementation, the terminal device 101 sends the tap event instruction to the cloud server 102 in response to the screen tap action of the user, where the tap event instruction is used to request the cloud server 102 to display the navigation bar on the current user interface.

Specifically, when the user wants the navigation bar to be displayed on the user interface of the cloud mobile phone, after the user taps the screen, the user interface component 1012 of the terminal device 101 obtains a tap input event, and sends key code corresponding to the tap input event to the cloud server 102. The cloud server 102 records the tap event corresponding to the key code to the input event module 1022, and requests the cloud-side processing module 1021 of the cloud server 102 to generate the user interface of the cloud mobile phone displaying the navigation bar.

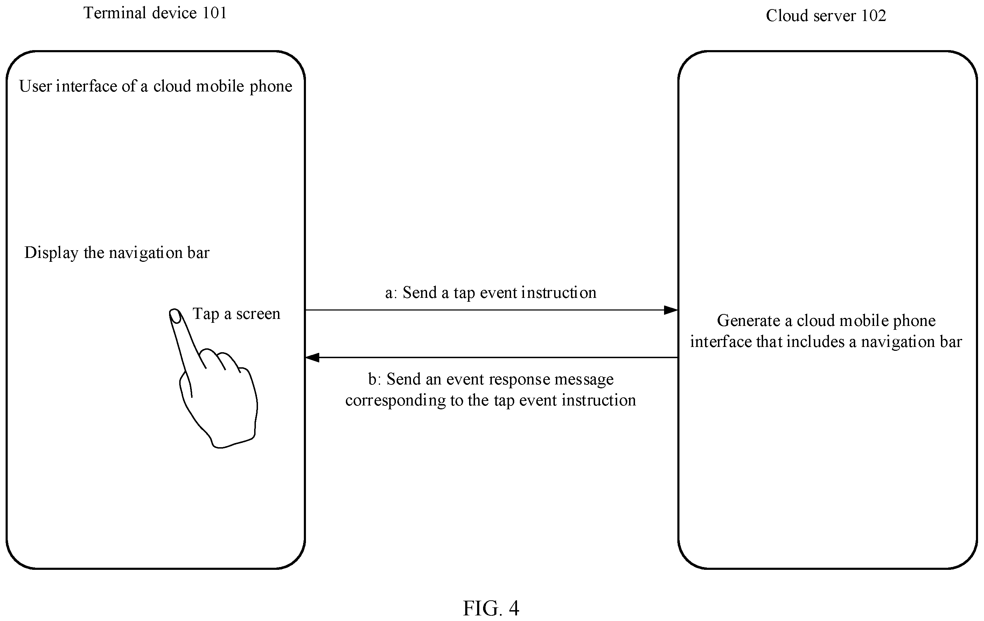

FIG. 4 is a diagram of other interaction of a cloud mobile phone according to an embodiment of this application. In an example shown in FIG. 4, after the terminal device 101 establishes the network connection with the cloud server 102, the terminal device 101 displays the user interface of the cloud mobile phone. In step a of the example shown in FIG. 4, when the user uses the cloud mobile phone via the terminal device 101, and the user expects the navigation bar to be displayed on the current user interface of the cloud mobile phone of the cloud mobile phone, the user may tap the screen of the terminal device 101, and the terminal device 101 responds to the screen tap action of the user and sends the tap event instruction to the cloud server 102.

It should be noted that, in addition to controlling, through the screen tap action, the cloud server 102 to display the navigation bar on the user interface of the cloud mobile phone, the user may control, through another specified input event, the cloud server 102 to display the navigation bar on the user interface of the cloud mobile phone, for example, shaking the terminal device, voice control, a custom gesture action on the screen, or the like. This is not specifically limited.

202: The terminal device receives an event response message sent by the cloud server, where the event response message includes the updated content generated by the cloud server based on the event instruction.

After receiving the first event instruction sent by the terminal device 101, the cloud server 102 generates the event response message based on the first event instruction sent by the terminal device 101, and sends the event response message to the terminal device 101, where the event response message includes the updated content generated by the cloud server 102 based on the event instruction.

For example, in an example of step 202, after the terminal device 101 responds to the screen tap action of the user and sends the screen tap event instruction to the cloud server 102, the cloud server 102 generates, based on the screen tap event instruction, a response message corresponding to the screen tap event instruction, where the response message includes the user interface of the cloud mobile phone displaying the navigation bar. The cloud server 102 sends the response message corresponding to the screen tap event instruction to the terminal device 101.

In a possible implementation, when the first event instruction is a rightward-swipe event instruction, the cloud server 102 generates an event response message based on the rightward-swipe event instruction, where the event response message indicates the user interface of the cloud mobile phone to return to the previous user interface.

In a possible implementation, when the first event instruction is a leftward-swipe event instruction, the cloud server 102 generates an event response message based on the leftward-swipe event instruction, where the event response message indicates the cloud mobile phone to go to the next user interface of the current user interface.

Still refer to FIG. 3A and FIG. 3B. In FIG. 3A, after the cloud server 102 receives the rightward-swipe event instruction sent by the terminal device 101, the cloud server 102 generates the response message of the rightward-swipe event instruction based on the rightward-swipe event instruction, where the response message of the rightward-swipe event instruction includes the previous interface of the current user interface of the cloud mobile phone.

In FIG. 3B, after the cloud server 102 receives the leftward-swipe event instruction sent by the terminal device 101, the cloud server 102 generates the response message of the leftward-swipe event instruction based on the leftward-swipe event instruction, where the response message of the leftward-swipe event instruction includes the next interface of the current user interface of the cloud mobile phone.

In a possible implementation, when the first event instruction is a tap event instruction, the cloud server 102 generates an event response message based on the tap event instruction, where the event response message indicates the cloud mobile phone to display the navigation bar on the current user interface.

Still refer to FIG. 4. In step b of the example shown in FIG. 4, after the cloud server 102 receives the tap event instruction sent by the terminal device 101, the cloud server 102 generates the response message of the tap event instruction based on the tap event instruction, where the response message of the tap event instruction includes the user interface of the cloud mobile phone displaying the navigation bar. The cloud server 102 sends the response message of the tap event instruction to the terminal device 101, so that the navigation bar is displayed on the user interface of the cloud mobile phone on the terminal device 101.

203: The terminal device displays the updated content on the terminal device based on the event response message, where the updated content includes one or more of the following: the navigation bar, the previous interface, and the next interface.

After receiving the event response message sent by the cloud server 102, the terminal device 101 displays the updated content on the terminal device 101 based on the event response message, where the updated content includes one or more of the following: the navigation bar of the cloud mobile phone, the previous interface of the user interface of the cloud mobile phone, and the next interface of the user interface of the cloud mobile phone.

For example, in an example of step 202, when the user wants the navigation bar to be displayed on the user interface of the cloud mobile phone, after the user performs the screen tap action, the terminal device 101 sends the screen tap event instruction to the cloud server 102, and the cloud server 102 sends the response message corresponding to the screen tap event instruction to the terminal device 101. After receiving the response message corresponding to the screen tap event instruction, the terminal device 101 displays, based on the response message, the user interface of the cloud mobile phone including the navigation bar.

In a possible implementation, when the event response message is the event response message corresponding to the rightward-swipe event instruction, the terminal device 101 displays the previous user interface of the cloud mobile phone on the terminal device 101 based on the event response message corresponding to the rightward-swipe event instruction.

In a possible implementation, when the event response message is the event response message corresponding to the leftward-swipe event instruction, the terminal device 101 displays the next user interface of the cloud mobile phone on the terminal device 101 based on the event response message corresponding to the leftward-swipe event instruction.

Still refer to FIG. 3A and FIG. 3B. In FIG. 3A of the example shown in FIG. 3A and FIG. 3B, when the event response message received by the terminal device 101 is the event response message that corresponds to the rightward-swipe event instruction and that is sent by the cloud server 102, the terminal device 101 parses a user interface corresponding to the event response message, and displays the previous interface of the current user interface of the cloud mobile phone on the terminal device 101.

In FIG. 3B of the example shown in FIG. 3A and FIG. 3B, when the event response message received by the terminal device 101 is the event response message that corresponds to the leftward-swipe event instruction and that is sent by the cloud server 102, the terminal device 101 parses a user interface corresponding to the event response message, and displays the next interface of the current user interface of the cloud mobile phone on the terminal device 101.

In a possible implementation, when the event response message is an event response message corresponding to the tap event instruction, the terminal device 101 displays a navigation bar of a user display interface of the cloud mobile phone on the terminal device 101 based on the event response message corresponding to the tap event instruction.

Still refer to FIG. 4. In the example shown in FIG. 4, when the event response message received by the terminal device 101 is the event response message that corresponds to the tap event instruction and that is sent by the cloud server 102, the terminal device 101 parses a user interface corresponding to the event response message, and displays the navigation bar on the user interface of the cloud mobile phone of the terminal device 101.

In a possible implementation, when the updated content is the navigation bar, the navigation bar is displayed at a bottom of the cloud mobile phone interface, or the navigation bar is displayed in a partial region of the cloud mobile phone interface. The navigation bar includes one or more of the following virtual buttons: a back button, a home button, and a menu button. When the navigation bar is displayed in the partial region of the cloud mobile phone interface, the navigation bar may be a virtual navigation button. The navigation bar may be displayed semi-transparently on the user interface of the cloud mobile phone.

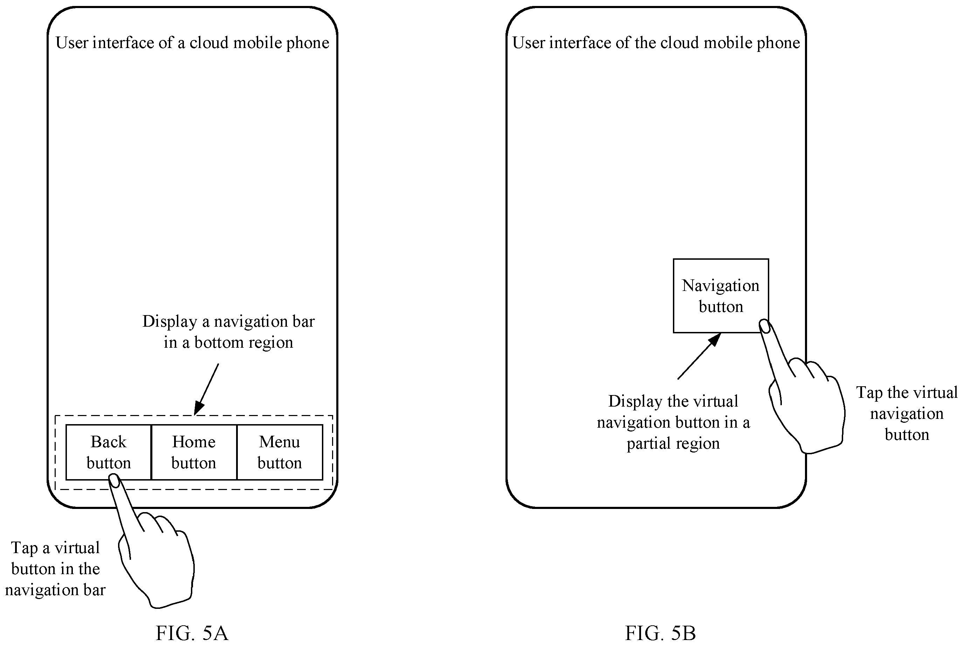

FIG. 5A and FIG. 5B is a diagram of a user interface of a cloud mobile phone according to an embodiment of this application. In an example shown in FIG. 5A and FIG. 5B, FIG. 5A is a diagram in which the navigation bar is displayed at the bottom of the cloud mobile phone interface, and FIG. 5B is a diagram in which the navigation bar is displayed at a part of the cloud mobile phone interface. In an example shown in FIG. 5A, the navigation bar at the bottom of the cloud mobile phone interface includes virtual buttons such as the back button, the home button, and the menu button. In an example shown in FIG. 5B, the navigation bar displayed in the partial region of the cloud mobile phone interface is a virtual navigation button. The virtual navigation button may alternatively be a floating ball, which is not specifically limited.

It may be understood that, in this embodiment of this application, in addition to being displayed at the bottom of the user interface of the cloud mobile phone, the navigation bar may alternatively be located at another location of the user interface of the cloud mobile phone, for example, a top region, a left edge region, or a right edge region of the user interface of the cloud mobile phone. This is not specifically limited.

In a possible implementation, after the terminal device 101 displays the updated content on the terminal device based on the event response message, when the updated content is the navigation bar, the terminal device 101 sends a second event instruction to the cloud server 102 in response to a second input event of the user for the virtual button in the navigation bar, where the second event instruction is used to request the cloud server 102 to generate a cloud mobile phone interface corresponding to the virtual button, and the second input event includes one or more of the following: tapping the screen, a custom gesture, and voice control.

Still refer to FIG. 5A and FIG. 5B. In FIG. 5A of the example shown in FIG. 5A and FIG. 5B, after the terminal device 101 displays the navigation bar at the bottom of the user interface of the cloud mobile phone based on the event response message sent by the cloud server 102, the navigation bar at the bottom of the cloud mobile phone interface includes virtual buttons such as the back button, the home button, and the menu button, and the user may further perform an operation on the virtual buttons in the navigation bar.

For example, when the user wants to return to the previous interface of the current user interface of the cloud mobile phone, the user may tap the back button in the navigation bar of the cloud mobile phone interface, the terminal device 101 responds to a back button tap action event of the user, and the terminal device 101 sends a back button tap event instruction to the cloud server 102, where the back button tap event instruction is used to request the cloud server 102 to generate the previous interface of the current user interface of the cloud mobile phone. After generating the previous interface of the current user interface of the cloud mobile phone based on the back button tap event instruction, the cloud server 102 sends an event response message corresponding to the back button tap event instruction to the terminal device 101, and the terminal device 101 displays the previous user interface of the cloud mobile phone based on the event response message.

In FIG. 5B of the example shown in FIG. 5A and FIG. 5B, the navigation bar appears as a navigation button in the partial region of the user interface of the mobile phone. After the terminal device 101 displays the navigation button in the partial region of the user interface of the cloud mobile phone based on the event response message sent by the cloud server 102, the user may further perform an operation on the navigation button.

For example, the user may tap the virtual navigation button of the user interface of the cloud mobile phone, and the terminal device 101 responds to a virtual navigation button tap action of the user, and sends a virtual navigation button tap event instruction to the cloud server 102. The cloud server 102 generates updated content of the user interface of the cloud mobile phone based on the virtual navigation button tap event instruction, where the updated content includes navigation bar content that is expanded and displayed on the current user interface of the cloud mobile phone, and the navigation bar content includes the back button, the home button, and the menu button. The cloud server 102 sends an event response message corresponding to the virtual navigation button tap event instruction to the terminal device 101, and the terminal device 101 displays an expanded navigation bar of the cloud mobile phone on the terminal device 101 based on the event response message.

In a possible implementation, the updated content is the navigation bar, and the terminal device 101 does not receive an input event of the user within a preset duration, where the input event includes an operation performed by the user on the navigation bar of the user interface of the cloud mobile phone. That is, the user does not perform an operation on the navigation bar of the user interface of the cloud mobile phone within the preset duration. In this case, the terminal device 101 receives an event message sent by the cloud server 102, where the event message indicates the terminal device 101 to hide the navigation bar on the cloud mobile phone interface. For example, the preset duration is 3 seconds to 8 seconds.

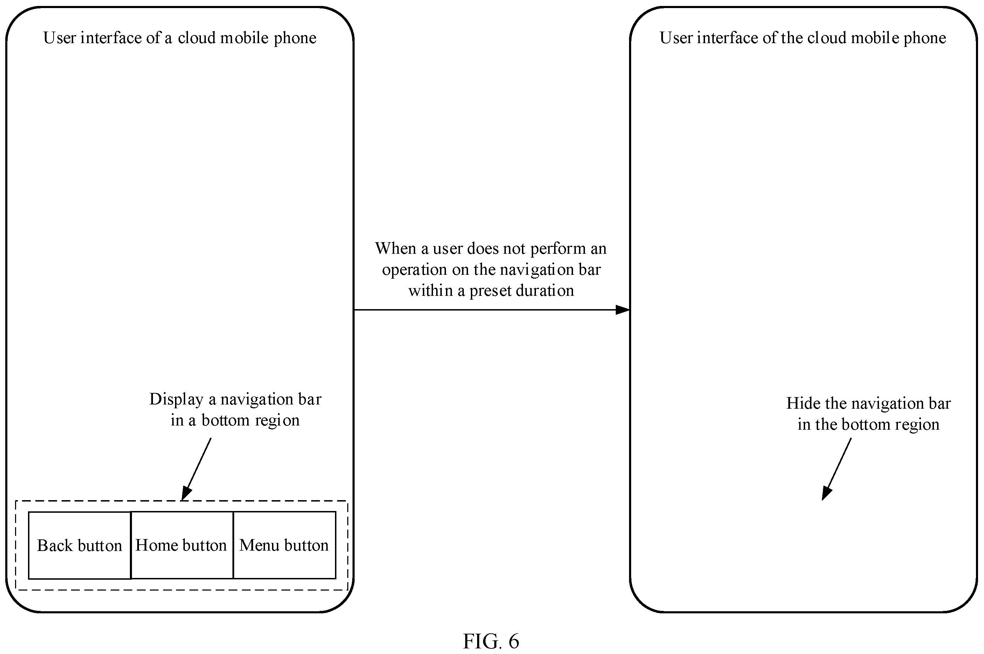

FIG. 6 is a diagram of hiding a navigation bar on a user interface of a cloud mobile phone according to an embodiment of this application. In an example shown in FIG. 6, the user interface of the cloud mobile phone displayed by the terminal device 101 includes the navigation bar. If the terminal device 101 does not receive the input event of the user within the preset duration, that is, if the user does not perform an operation on the navigation bar of the user interface of the cloud mobile phone within the preset duration, the cloud server 102 sends the event message to the terminal device 101, where the event message indicates the terminal device 101 to hide the navigation bar on the cloud mobile phone interface.

In the example shown in FIG. 6, when the navigation bar appears as a virtual navigation button in the partial region, if the terminal device 101 does not receive the input event of the user within the preset duration, that is, the user does not perform an operation on the virtual navigation button of the user interface of the cloud mobile phone within the preset duration, the cloud server 102 sends the event message to the terminal device 101, where the event message indicates the terminal device 101 to hide the virtual navigation button on the cloud mobile phone interface.

In a possible implementation, when the navigation bar appears as a virtual navigation button in the partial region, the terminal device 101 sends a short press event instruction to the cloud server 102 in response to a short press action of the user on the virtual navigation button, where the short press event instruction is used to request the cloud server 102 to generate a home screen of the cloud mobile phone, a duration of the short press action is less than a first threshold, and the first threshold is, for example, 200 milliseconds to 500 milliseconds.

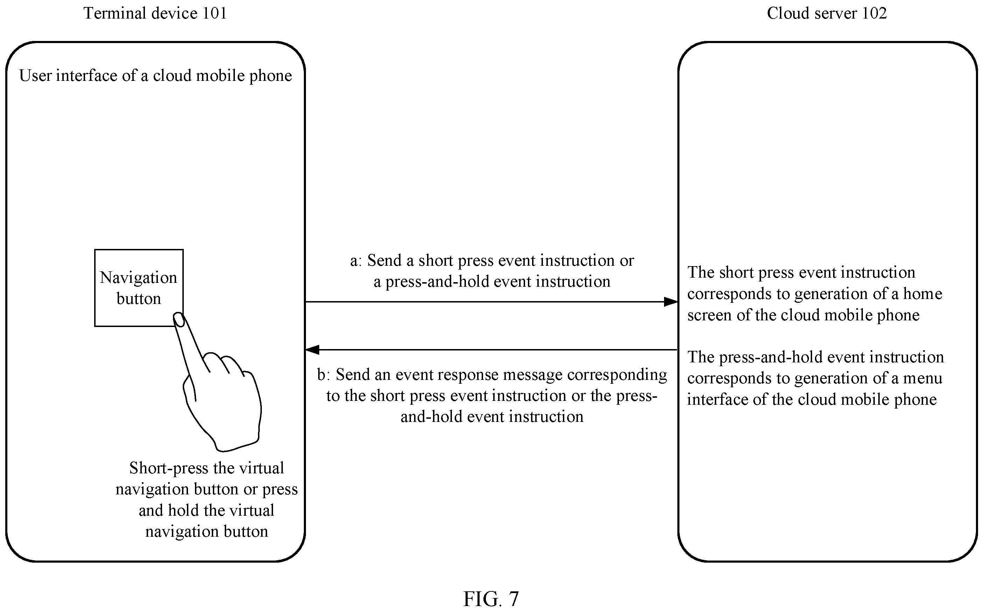

FIG. 7 is a diagram of interaction of a virtual navigation button on a cloud mobile phone interface according to an embodiment of this application. In an example shown in FIG. 7, after the terminal device 101 displays the virtual navigation button of the user interface of the cloud mobile phone on the terminal device 101 based on the event response message sent by the cloud server 102, when the user wants the terminal device 101 to display the home screen of the cloud mobile phone, the user may short-press the virtual navigation button. For example, the user short-presses the virtual navigation button for 200 milliseconds. The terminal device 101 responds to a short press action of the user, and sends a short press event instruction to the cloud server 102. The cloud server 102 generates the home screen of the cloud mobile phone based on the short press event instruction, and sends an event response message corresponding to the short press event instruction to the terminal device 101. The terminal device 101 displays the home screen of the user interface of the cloud mobile phone on the terminal device 101 based on the event response message.

In a possible implementation, when the navigation bar appears as a virtual navigation button, the terminal device 101 sends a press-and-hold event instruction to the cloud server 102 in response to a press-and-hold action of the user on the virtual navigation button, where the press-and-hold event instruction is used to request the cloud server 102 to generate a menu interface of the cloud mobile phone, and a duration of the press-and-hold action is greater than or equal to a first threshold.

Still refer to FIG. 7. In the example shown in FIG. 7, when the navigation bar of the user interface of the cloud mobile phone is a virtual navigation button in the partial region, and the user expects the terminal device 101 to display the menu interface of the cloud mobile phone, the user may press and hold the virtual navigation button. For example, the user presses and holds the virtual navigation button for 500 milliseconds. The terminal device 101 responds to a press-and-hold action of the user, and sends a press-and-hold event instruction to the cloud server 102. After receiving the press-and-hold event instruction, the cloud server 102 generates the menu interface of the user interface of the cloud mobile phone based on the press-and-hold event instruction, and sends an event response message corresponding to the press-and-hold event instruction to the terminal device 101, where the event response message corresponding to the press-and-hold event instruction includes the menu interface of the user interface of the cloud mobile phone. The terminal device 101 displays the menu interface of the user interface of the cloud mobile phone on the terminal device 101 based on the event response message.

It can be learned from the foregoing embodiments that in embodiments of this application, the terminal device 101 of the cloud mobile phone system can send an event instruction to the cloud server 102 based on an input event of the user, so that the cloud server 102 can control the user interface of the cloud mobile phone based on a specified input event of the user, to improve display flexibility of the user interface of the cloud mobile phone.

Based on the foregoing method embodiments, an embodiment of this application further provides an interaction apparatus for a cloud mobile phone. The following specifically describes the interaction apparatus for a cloud mobile phone provided in this embodiment of this application.

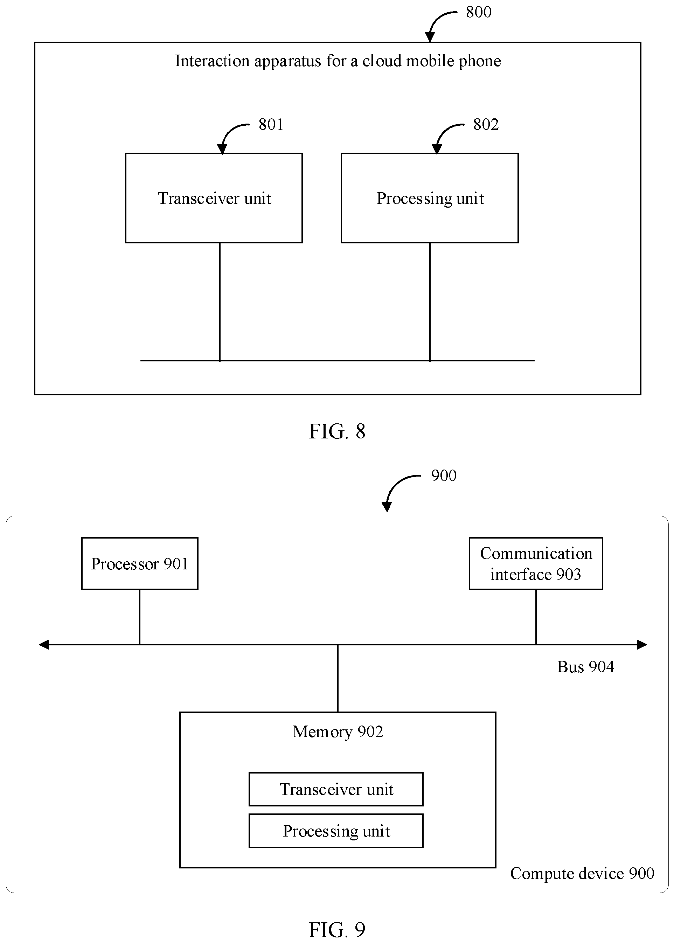

FIG. 8 is a diagram of a structure of an interaction apparatus for a cloud mobile phone according to an embodiment of this application. In an example shown in FIG. 8, the interaction apparatus 800 of a cloud mobile phone is configured to implement the steps performed by the cloud mobile phone system 10 in the foregoing embodiments. The interaction apparatus 800 of a cloud mobile phone includes a transceiver unit 801 and a processing unit 802.

The transceiver unit 801 is configured to send a first event instruction to a cloud server in response to a first input event of a user, where the first event instruction is used to request the cloud server to generate updated content of a cloud mobile phone service. The transceiver unit 801 is further configured to receive an event response message sent by the cloud server, where the event response message includes the updated content generated by the cloud server based on the event instruction. The processing unit 802 is configured to display the updated content on a terminal device based on the event response message, where the updated content includes one or more of the following: a navigation bar, a previous interface, and a next interface.

In a possible implementation, the first input event includes one or more of the following: a screen tap or swipe, a device shake, a custom gesture, and a voice command.

In a possible implementation, the updated content is the navigation bar. The navigation bar includes one or more of the following virtual buttons: a back button, a home button, and a menu button. The navigation bar is displayed at a bottom of a cloud mobile phone interface, or the navigation bar is displayed in a partial region of a cloud mobile phone interface.

In a possible implementation, the transceiver unit 801 is further configured to send a second event instruction to the cloud server in response to a second input event of the user for the virtual button in the navigation bar, where the second event instruction is used to request the cloud server to generate a cloud mobile phone interface corresponding to the virtual button, and the second input event includes one or more of the following: tapping the screen, a custom gesture, and voice control.

In a possible implementation, the transceiver unit 801 is further configured to: when the terminal device does not receive an input event of the user within a preset duration, receive an event message sent by the cloud server, where the event message indicates the terminal device to hide the navigation bar on the cloud mobile phone interface.

In a possible implementation, when the navigation bar is displayed in the partial region of the cloud mobile phone interface, the navigation bar appears as a virtual navigation button, and the transceiver unit 801 is further configured to send a short press event instruction to the cloud server in response to a short press action of the user on the virtual navigation button, where the short press event instruction is used to request the cloud server to generate a home screen of the cloud mobile phone, and a duration of the short press action is less than a first threshold.

In a possible implementation, when the navigation bar is displayed in the partial region of the cloud mobile phone interface, the navigation bar appears as a virtual navigation button, and the transceiver unit 801 is further configured to send a press-and-hold event instruction to the cloud server in response to a press-and-hold action of the user on the virtual navigation button, where the press-and-hold event instruction is used to request the cloud server to generate a menu interface of the cloud mobile phone, and a duration of the press-and-hold action is greater than or equal to the first threshold.

It may be understood that the transceiver unit 801 and the processing unit 802 in the interaction apparatus 800 of a cloud mobile phone may be used as functional modules to be mapped to the modules in the cloud mobile phone system 10 in FIG. 1, to implement functions of the modules in the cloud mobile phone system 10.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in the form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

It should be noted that, for brief description, the foregoing method embodiments are represented as a series of actions. However, a person skilled in the art should know that this application is not limited to the described order of the actions. In addition, a person skilled in the art should also know that all the embodiments described in this specification are example embodiments, and the related actions are not necessarily mandatory to this application.

Another appropriate step combination that can be figured out by a person skilled in the art according to the content described above also falls within the protection scope of this application. In addition, a person skilled in the art should further understand that embodiments described in this specification all belong to example embodiments, and the related actions are not necessarily required by this application.

FIG. 9 is a diagram of a structure of a compute device according to an embodiment of this application. As shown in FIG. 9, the compute device 900 includes a processor 901, a memory 902, a communication interface 903, and a bus 904. The processor 901, the memory 902, and the communication interface 903 are coupled through the bus (not shown in the figure). The memory 902 stores instructions. When the executable instructions in the memory 902 are executed, the compute device 900 performs the method performed by the terminal device or the cloud server in the foregoing method embodiments.

The compute device 900 may be one or more integrated circuits configured to implement the foregoing methods, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when units in the apparatus may be implemented in the form of scheduling a program by a processing element, the processing element may be a general-purpose processor, for example, a central processing unit (central processing unit, CPU) or another processor that may invoke the program. For another example, the units may be integrated and implemented in the form of system-on-a-chip (system-on-a-chip, SOC).

The processor 901 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The memory 902 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 902 stores executable program code, and the processor 901 executes the executable program code to implement functions of the foregoing units or modules, so as to implement the foregoing interaction method for a cloud mobile phone. In other words, the memory 902 stores instructions used to perform the foregoing interaction method for a cloud mobile phone.

The communication interface 903 uses a transceiver module, for example but not limited to, a network interface card or a transceiver, to implement communication between the compute device 900 and another device or a communication network.

In addition to a data bus, the bus 904 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

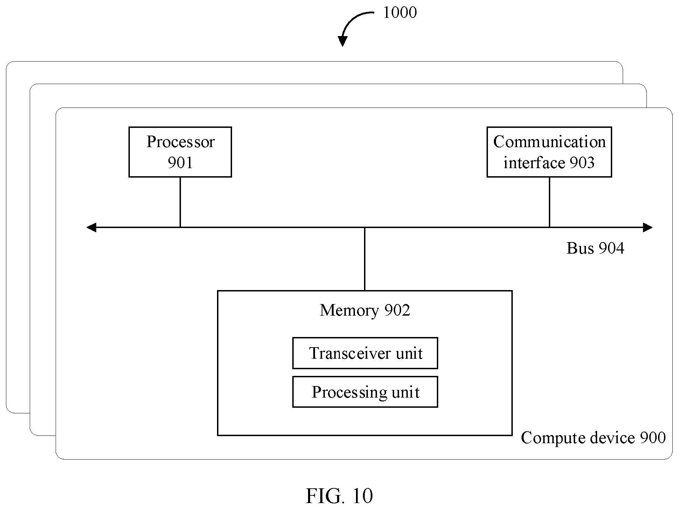

FIG. 10 is a diagram of a compute device cluster according to an embodiment of this application. As shown in FIG. 10, the compute device cluster 1000 includes at least one compute device 900.

As shown in FIG. 10, the compute device cluster 1000 includes at least one compute device 900. Memories 902 in one or more compute devices 900 in the compute device cluster 1000 may store same instructions for performing the foregoing interaction method for a cloud mobile phone.

In some possible implementations, the memories 902 in the one or more compute devices 900 in the compute device cluster 1000 may alternatively separately store some instructions for performing the foregoing interaction method for a cloud mobile phone. In other words, a combination of the one or more compute devices 900 may jointly execute the instructions used to perform the foregoing interaction method for a cloud mobile phone.

It should be noted that memories 902 in different compute devices 900 in the compute device cluster 1000 may store different instructions respectively for performing some functions of the foregoing interaction apparatus for a cloud mobile phone. In other words, the instructions stored in the memories 902 in different compute devices 900 may implement functions of one or more modules in the processing unit and the transceiver unit.

In some possible implementations, the one or more compute devices 900 in the compute device cluster 1000 may be connected through a network. The network may be a wide area network, a local area network, or the like.

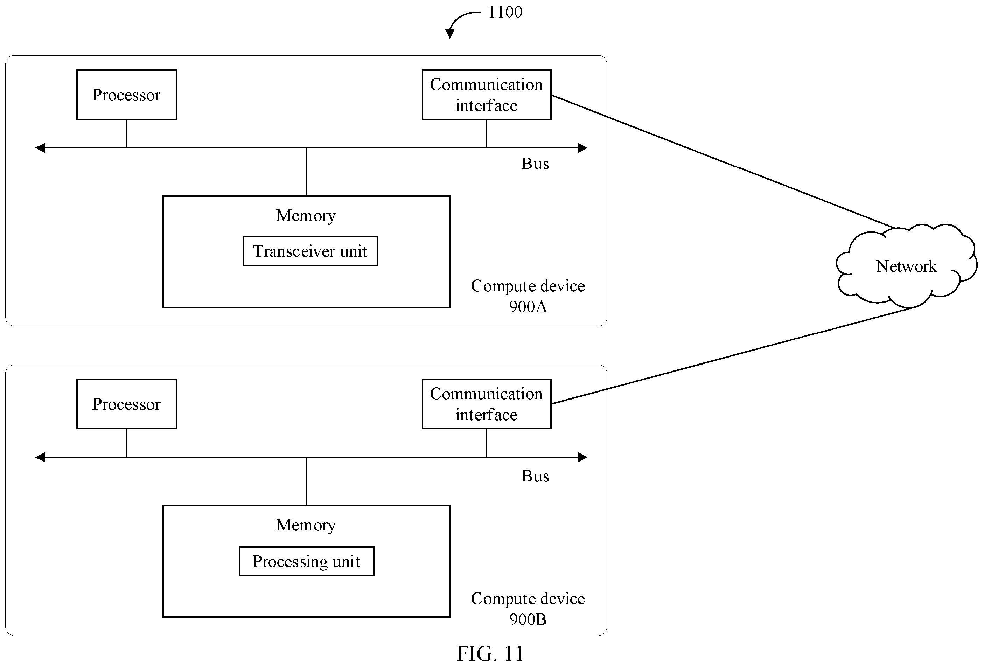

FIG. 11 is a diagram in which computer devices in a computer cluster are connected through a network according to an embodiment of this application. As shown in FIG. 11, a compute device 900A and a compute device 900B are connected through the network. Specifically, the compute devices are connected to the network through communication interfaces in the compute devices.

In a possible implementation, a memory in the compute device 900A stores instructions for performing a function of a transceiver unit. In addition, a memory in the compute device 900B stores instructions for performing a function of a processing unit.

It should be understood that a function of the compute device 900A shown in FIG. 11 may alternatively be completed by a plurality of compute devices. Similarly, a function of the compute device 900B may alternatively be completed by a plurality of compute devices.

In another embodiment of this application, a computer-readable storage medium is further provided. The computer-readable storage medium stores computer-executable instructions. When a processor of a device executes the computer-executable instructions, the device performs the method performed by the cloud mobile phone system in the foregoing method embodiments.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by the cloud mobile phone system in the foregoing method embodiments.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in the form of hardware, or may be implemented in the form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An interaction method for a cloud mobile phone, applied to a cloud mobile phone system, wherein the cloud mobile phone system comprises a terminal device and a cloud server, the cloud server is configured to provide a cloud mobile phone service for the terminal device, and the method comprises:
sending, by the terminal device, a first event instruction to the cloud server in response to a first input event of a user, wherein the first event instruction is used to request the cloud server to generate updated content of the cloud mobile phone service;
receiving, by the terminal device, an event response message sent by the cloud server, wherein the event response message comprises the updated content generated by the cloud server based on the first event instruction; and
displaying, by the terminal device, the updated content on the terminal device based on the event response message, wherein the updated content comprises one or more of the following: a navigation bar, a previous interface, and a next interface.

2. The method according to claim 1, wherein the first input event comprises one or more of the following: a screen tap or swipe, a device shake, a custom gesture, and a voice command.

3. The method according to claim 1 or 2, wherein the updated content is the navigation bar, the navigation bar comprises one or more of the following virtual buttons: a back button, a home button, and a menu button, and the navigation bar is displayed at a bottom of a cloud mobile phone interface, or the navigation bar is displayed in a partial region of a cloud mobile phone interface.

4. The method according to claim 3, wherein the method further comprises:
sending, by the terminal device, a second event instruction to the cloud server in response to a second input event of the user for the virtual button in the navigation bar, wherein the second event instruction is used to request the cloud server to generate a cloud mobile phone interface corresponding to the virtual button, and the second input event comprises one or more of the following: tapping the screen, a custom gesture, and voice control.

5. The method according to claim 3 or 4, wherein after displaying, by the terminal device, the updated content on the terminal device based on the event response message, the method further comprises:
when the terminal device does not receive an input event of the user within a preset duration, receiving, by the terminal device, an event message sent by the cloud server, wherein the event message indicates the terminal device to hide the navigation bar on the cloud mobile phone interface.

6. The method according to any one of claims 3 to 5, wherein when the navigation bar is displayed in the partial region of the cloud mobile phone interface, the navigation bar appears as a virtual navigation button, and the method further comprises:
sending, by the terminal device, a short press event instruction to the cloud server in response to a short press action of the user on the virtual navigation button, wherein the short press event instruction is used to request the cloud server to generate a home screen of the cloud mobile phone, and a duration of the short press action is less than a first threshold.

7. The method according to any one of claims 3 to 5, wherein when the navigation bar is displayed in the partial region of the cloud mobile phone interface, the navigation bar appears as a virtual navigation button, and the method further comprises:
sending, by the terminal device, a press-and-hold event instruction to the cloud server in response to a press-and-hold action of the user on the virtual navigation button, wherein the press-and-hold event instruction is used to request the cloud server to generate a menu interface of the cloud mobile phone, and a duration of the press-and-hold action is greater than or equal to a first threshold.

8. An interaction apparatus for a cloud mobile phone, used in a cloud mobile phone system, wherein the apparatus comprises:
a transceiver unit, configured to send a first event instruction to a cloud server in response to a first input event of a user, wherein the first event instruction is used to request the cloud server to generate updated content of a cloud mobile phone service; and
the transceiver unit is further configured to receive an event response message sent by the cloud server, wherein the event response message comprises the updated content generated by the cloud server based on the event instruction; and
a processing unit, configured to display the updated content on a terminal device based on the event response message, wherein the updated content comprises one or more of the following: a navigation bar, a previous interface, and a next interface.

9. The apparatus according to claim 8, wherein the first input event comprises one or more of the following: a screen tap or swipe, a device shake, a custom gesture, and a voice command.

10. The apparatus according to claim 8 or 9, wherein the updated content is the navigation bar, the navigation bar comprises one or more of the following virtual buttons: a back button, a home button, and a menu button, and the navigation bar is displayed at a bottom of a cloud mobile phone interface, or the navigation bar is displayed in a partial region of a cloud mobile phone interface.

11. The apparatus according to claim 10, wherein the transceiver unit is further configured to:
send a second event instruction to the cloud server in response to a second input event of the user for the virtual button in the navigation bar, wherein the second event instruction is used to request the cloud server to generate a cloud mobile phone interface corresponding to the virtual button, and the second input event comprises one or more of the following: tapping the screen, a custom gesture, and voice control.

12. The apparatus according to claim 10 or 11, wherein the transceiver unit is further configured to:
when the terminal device does not receive an input event of the user within a preset duration, receive an event message sent by the cloud server, wherein the event message indicates the terminal device to hide the navigation bar on the cloud mobile phone interface.

13. The apparatus according to any one of claims 10 to 12, wherein when the navigation bar is displayed in the partial region of the cloud mobile phone interface, the navigation bar appears as a virtual navigation button, and the transceiver unit is further configured to:
send a short press event instruction to the cloud server in response to a short press action of the user on the virtual navigation button, wherein the short press event instruction is used to request the cloud server to generate a home screen of the cloud mobile phone, and a duration of the short press action is less than a first threshold.

14. The apparatus according to any one of claims 10 to 13, wherein when the navigation bar is displayed in the partial region of the cloud mobile phone interface, the navigation bar appears as a virtual navigation button, and the transceiver unit is further configured to:
send a press-and-hold event instruction to the cloud server in response to a press-and-hold action of the user on the virtual navigation button, wherein the press-and-hold event instruction is used to request the cloud server to generate a menu interface of the cloud mobile phone, and a duration of the press-and-hold action is greater than or equal to a first threshold.

15. A compute device, comprising a processor, wherein the processor is coupled to a memory, the memory is configured to store instructions, and when the instructions are executed by the processor, the compute device is enabled to perform the method according to any one of claims 1 to 7.

16. A compute device cluster, comprising at least one compute device, wherein the compute device comprises a processor, the processor is coupled to a memory, the processor is configured to store instructions, and when the instructions are executed by the processor, the compute device cluster is enabled to perform the method according to any one of claims 1 to 7.

17. A computer-readable storage medium, wherein the computer-readable storage medium stores instructions, and when the instructions are executed, a computer is enabled to perform the method according to any one of claims 1 to 7.

18. A computer program product, wherein the computer program product comprises instructions, and when the instructions are executed, a computer is enabled to implement the method according to any one of claims 1 to 7.
